# EUROPÄISCHE PATENTSCHRIFT

(11) **EP 0 743 579 B1**
(45) Veröffentlichungstag und Bekanntmachung des Hinweises auf die Patenterteilung: **25.11.1998**
(21) Anmeldenummer: 96106924.2
(22) Anmeldetag: 02.05.1996
(51) Int. Cl.: G05B 19/416, G05B 19/4103

(54) **Verfahren zum Betrieb einer numerisch gesteuerten Werkzeugmaschine oder eines Roboters**
Process for the operation of a numeric controlled machine tool or of a robot
Procédé de commande d'une machine outil à commande numérique ou d'un robot

(30) Priorität: 15.05.1995 DE 19517771
(43) Veröffentlichungstag der Anmeldung: 20.11.1996
(73) Patentinhaber: SIEMENS AKTIENGESELLSCHAFT, 80333 München (DE)
(72) Erfinder: Müller, Jürgen, Dipl.-Ing., 71640 Ludwigsburg (DE)

(56) Entgegenhaltungen:
- EP-A- 0 583 487

## Beschreibung

Die Erfindung bezieht sich auf ein Verfahren zum Betrieb einer numerisch gesteuerten mehrachsigen Werkzeugmaschine oder eines Roboters gemäß einem jeweils vorgegebenen Programm, das nach einer Satzaufbereitung in einem Interpolator in Interpolationsschritten Sollwerte zur Ansteuerung der Achsen bestimmt, wobei mindestens eine der Achsen durch einen Software-Endschalter auf eine jeweils vorgebbare Endlage begrenzbar ist.

Bei einer numerisch gesteuerten mehrachsigen Werkzeugmaschine oder einem Roboters sind die Achsantriebe üblicherweise mit hardwaremäßigen Endschaltern versehen. Zusätzlich können einige Achsen auch noch mit sogenannten Software-Endschaltern versehen sein, z.B. um dem Benutzer eine frei einstellbare Arbeitsfeldbegrenzung zu erlauben. Die Steuerung der Werkzeugmaschine oder des Roboters muß dann sicherstellen, daß die jeweiligen Achsantriebe diese zusätzlichen Software-Endschalter berücksichtigen bzw. daß verhindert wird, daß ein Achse beispielsweise während der Aufführung eines Teileprogramms über ihren vorgegebenen Software-Endschalter hinausfährt.

Im Betrieb fahren die Achsantriebe mit einer bestimmten Geschwindigkeit und haben daher auch eine entsprechende Trägheit. Dazu kommt, daß die Achsantriebe nur mit einer bestimmten maximalen zulässigen Bremsbeschleunigung abgebremst 1;erden können. Wenn erst bei Übertretung des Software-Endschalters abgebremst wird, entsteht das Problem, daß die Achse erst hinter der vorgegebenen Position des Software-Endschalters zum Stillstand kommt und zwar auch dann, wenn mit mehr als der maximalen zulässigen Bremsbeschleunigung der Achse abgebremst wird. Das Überfahren der vorgegebenen Position des Software-Endschalters ist selbstverständlich aus Sicherheitsgründen unerwünscht.

Die bisherige Lösung bestand darin, daß jeder Software-Endschalter mit einem zusätzlichen Software-Vor-Endschalter versehen wurde und daß im Bereich zwischen dem Software-Vor-Endschalter und dem eigentlichen Software-Endschalter der entsprechende Achsantrieb mit einer stark herabgesetzten Maximalgeschwindigkeit betrieben wurde. Eine herabgesetzte Maximalgeschwindigkeit bestimmt jedoch die Trägheit der Achse. Bei der Abbremsung wird jedoch dennoch die maximale zulässige Abbremsungsbeschleunigung überschritten, damit die Achse nicht allzuweit hinter der vorgegebenen Position des Software-Endschalters zum Stillstand kommt.

Diese Lösung hat unter anderem den Nachteil, daß ein Achsantrieb, dessen Bearbeitungsbahn in den Bereich zwischen Software-Vor-Endschalter und dem eigentlichen Software-Endschalter eindringt, grundsätzlich mit der herabgesetzten Maximalgeschwindigkeit fährt, auch wenn der eigentlichen Software-Endschalter nie erreicht wird, weil vielleicht die Bearbeitungsbahn parallel zum Software-Endschalter verläuft. Ferner wird durch die herabgesenkte Maximalgeschwindigkeit das Problem nicht richtig gelöst, weil lediglich die Entfernung hinter der vorgegebenen Position des Software-Endschalters, WO die Achse letztendlich zum Stillstand kommen kann, nur begrenzt wird. Die vorgegebene Position des Software-Endschalters würde aber in jedem Fall überfahren. Auch das Abbremsen mit mehr als der maximalen zulässigen Bremsungsbeschleunigung wäre für den Achsantrieb schädlich.

Aufgabe der Erfindung ist es, ein Verfahren der eingangs genannten Art so auszubilden, daß eine Achse mit Software-Endschalter nicht hinter der vorgegebenen Position zum Stillstand kommt, daß die Maximalgeschwindigkeit der Achse nicht unnötigerweise herabgesetzt wird und daß nur mit der maximalen zulässigen Bremsungsbeschleunigung gebremst wird.

Gemäß der Erfindung wird diese Aufgabe dadurch gelöst, daß im Interpolator bei jedem Bestimmen des nächsten Interpolationsschritts für jede Achse mit Software-Endschalter geprüft wird, ob diese unter Berücksichtigung ihrer beim nächsten Interpolationsschritt zu erreichenden axialen Geschwindigkeit bei einer Bremsung mit ihrer maximalen axialen Bremsbeschleunigung noch bis zu der durch den jeweiligen Software-Endschalter bestimmten jeweiligen axialen Endlage zum Stehen kommen kann, und daß Achsen, für die dies nicht mehr der Fall ist, anstelle des nächsten Interpolationsschritts mit ihrer jeweiligen maximalen axialen Bremsbeschleunigung abgebremst werden.

Diese Erfindung hat den Vorteil, daß die vom Software-Endschalter vorgegebene Endlage keinesfalls überfahren wird, daß nur mit der maximal zulässigen axialen Bremsbeschleunigung abgebremst wird und daß die Bahngeschwindigkeit in der Nähe des Software-Endschalters nicht unnötigerweise begrenzt wird.

Eine vorteilhafte Weiterbildung der Erfindung besteht darin, daß dann, wenn eine Achse zur Endlagenbegrenzung mit ihren jeweiligen maximalen axialen Bremsbeschleunigungen abgebremst wird, diese Achse aus dem Interpolationsverband gelöst wird und die verbleibenden Achsen mit der bearbeitungsbahnspezifischen Bremsbeschleunigung abgebremst werden.

Dies hat den Vorteil, daß nur die jeweils vom Software-Endschalter betroffenen Achse maximal abgebremst wird, während die verbleibenden Achsen mit der bearbeitungsbahnspezifischen Bremsbeschleunigung relativ sanft bremsen, damit Achsen mit geringeren zulässigen axialen Bremsbeschleunigungen nicht überlastet werden.

Ein Ausführungsbeispiel der Erfindung ist in den Zeichnungen dargestellt und wird im folgenden näher erläutert. Dabei zeigen:
- FIG 1: ein Blockdiagramm einer erfindungsgemäßen numerischen Steuerung,
- FIG 2 und 5: Diagramme mit erfindungsgemäßen Interpolationskurve im Orts-Geschwindigkeitsraum,
- FIG 3 und 6: Diagramme mit interpolierten Bahnverläufen im X-Y-Ortsraum,
- FIG 4 und 7: Diagramme mit bekannten Interpolationskurven im Orts-Geschwindigkeitsraum.

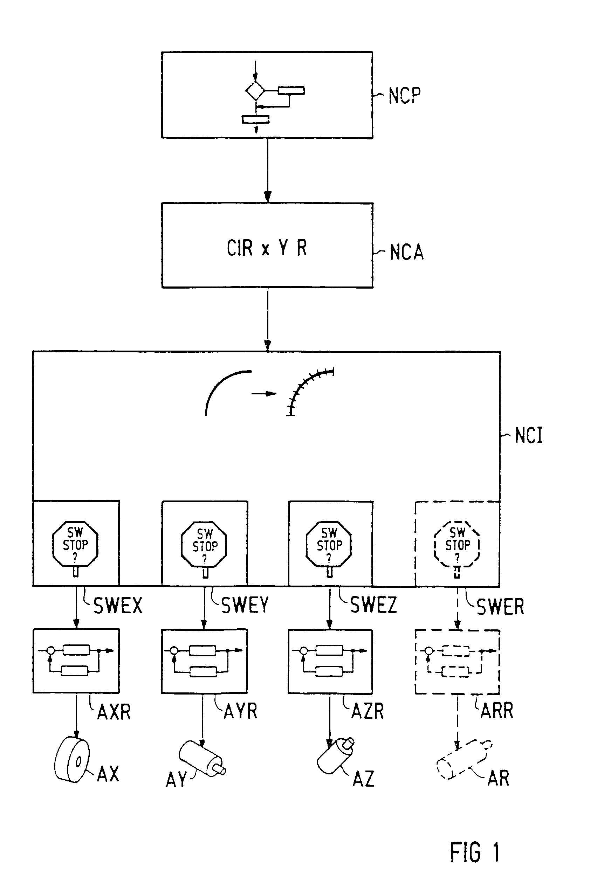

Die Darstellung gemäß FIG 1 zeigt ein Blockdiagramm einer numerischen Steuerung, bei der ein vorgegebenes numerisches Steuerungsprogramm NCP, nach einer Satzaufbereitung NCA in einem Interpolator NCI in Interpolationsschritten Sollwerte zur Ansteuerung der Achsen bestimmt. Einige der Achsen X, Y, Z, R haben einen Software-Endschalter SWEX, SWEY, SWEZ, SWER der die Achsbewegungen auf eine jeweils vorgebbare Endlage begrenzt.

Der Software-Endschalter SWER, der Achsregler ARR und der Achsantrieb AR sind strichpunktiert in FIG 1 gezeichnet, um anzudeuten, daß jeweils ein Software-Endschalter, ein Achsregler und ein Achsantrieb für beliebig viele Achsen vor-landen sein können.

Nachdem der Interpolator bei dem jeweils nächsten Interpolationsschritt den Sollwert für jede Achse X, Y, Z, R, bestimmt hat, wird in den Software-Endschaltern SWEX, SWEY, SWEZ, SWER geprüft, ob die Achsantriebe AX, AY, AZ, AR unter Berücksichtigung ihrer beim nächsten Interpolationsschritt zu erreichenden axialen Geschwindigkeit bei einer Bremsung mit der jeweils maximalen zulässigen axialen Bremsbeschleunigung noch bis zu der durch den jeweiligen Software-Endschalter bestimmten jeweiligen axialen Endlage zum Stillstand kommen können.

Wenn eine Achse noch vor dem jeweiligen Software-Endschalter zum Stillstand gebracht werden kann, wird der Sollwert für den nächsten Interpolationsschritt an den entsprechenden Achsregler AXR, AYR, AZR, ARR ausgegeben und die entsprechenden Achsantriebe AX, AY, AZ, AR werden damit angesteuert.

Bei Achsen, die nicht mehr vor dem jeweiligen Software-Endschalter zum Stillstand gebracht werden können, wird anstelle des Sollwertes für den nächsten Interpolationsschritt ein Sollwert, der der jeweiligen maximalen zulässigen axialen Bremsbeschleunigung entspricht, an den entsprechenden Achsregler ausgegeben. Der entsprechende Achsantrieb wird damit so gesteuert, daß die zugehörige Achse mit ihrer jeweiligen maximalen zulässigen axialen Bremsbeschleunigung abgebremst wird.

Eine solche Achse wird dabei aus einem eventuell bestehenden Interpolationsverband gelöst und die verbleibenden Achsen werden zusätzlich durch den Interpolator NCI mit der bearbeitungsbahnspezifischen Bremsbeschleunigung ebenfalls abgebremst.

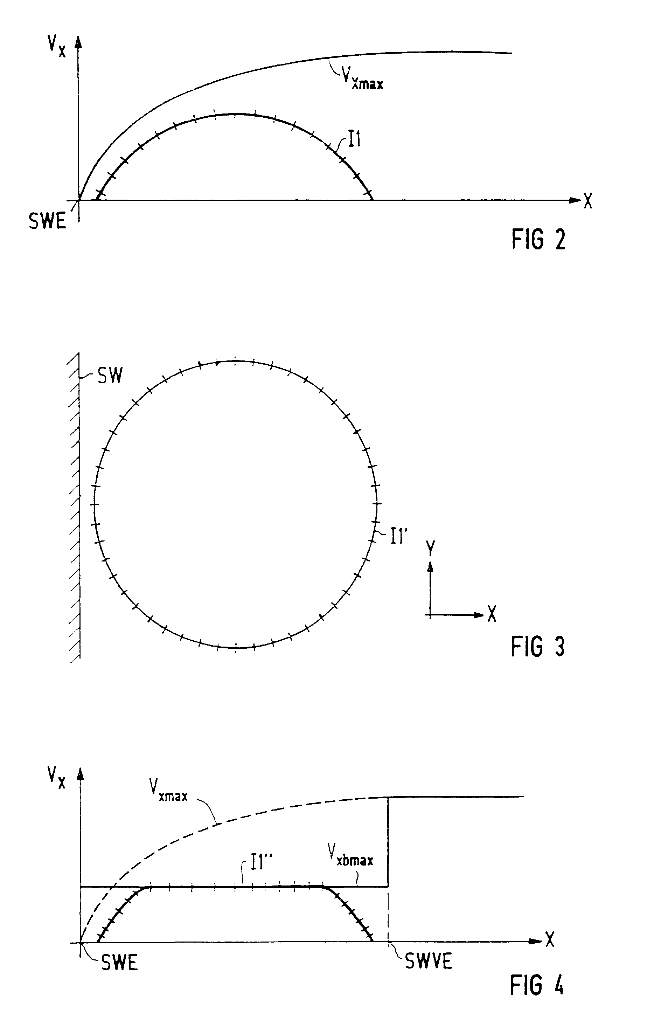

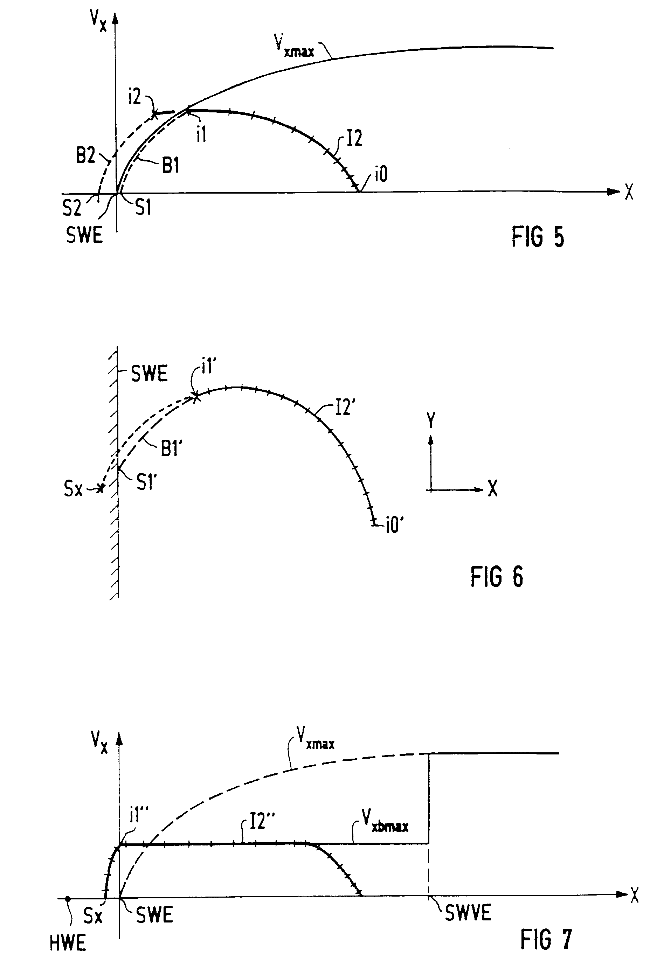

In FIG 2 und FIG 3 und FIG 5 und FIG 6 wird die Erfindung beispielhaft an Hand der X-Achse erklärt. Entsprechendes gilt für alle anderen Achsen mit Software-Endschalter. FIG 4 und FIG 7 zeigen die zu FIG 2 und FIG 3, bzw. FIG 5 und FIG 6 passenden Lösungen.

FIG 2, FIG 5, FIG 4 und FIG 7 sind Diagramme mit waagerechter Koordinate X, die der Position entlang der X-Achse der Werkzeugmaschine oder des Roboters entspricht, und mit senkrechter Koordinate Vx, die der Geschwindigkeit entlang dieser X-Achse entspricht.

Der Punkt SWE entspricht der durch den Software-Endschalter SWEX vom Benutzer vorgegebenen Endlage der Achsbewegungen längs der X-Achse.

Die Kurve Vxmax entspricht der maximalen Geschwindigkeit entlang der X-Achse, damit diese noch rechtzeitig zum Stillstand kommen kann. Die Vxmax Kurve entsteht dadurch, daß für jede Lage entlang der X-Achse die maximale Geschwindigkeit berechnet wird, damit die X-Achse mit ihrer entsprechenden Trägheit genau auf der vorgegebenen Endlage SWE zu Stillstand kommt, wenn mit der für die X-Achse maximalen zulässigen axialen Bremsbeschleunigung abgebremst wird. Die Einzelheiten derartige Berechnungen gehören zum normalen Fachwissen und brauchen nicht weiter erläutert zu werden.

In FIG 4 und 7 markiert der Punkt SWVE den zusätzlichen Software-Vor-Endschalter der bisherigen Lösung. In dem Bereich zwischen dem Software-Vor-Endschalter SWVE und dem eigentlichen Software-Endschalter SWE ist der Achsantrieb durch eine stark herabgesetzte Maximalgeschwindigkeit Vxbmax begrenzt.

In FIG 2 stellt die Kurve I1 eine Interpolationskurve im Orts-Geschwindigkeitsraum X-Vx dar. Die Interpolationskurve I1 liegt vollständig unterhalb der maximalen Geschwindigkeitskurve Vxmax. Das bedeutet, daß bei einer Abbremsung mit der für die X-Achse maximalen zulässigen axialen Bremsbeschleunigung die X-Achse immer vor der vorgegebenen Endlage SWE zum Stillstand kommen würde. Die Interpolationskurve I1 kann daher, zumindest was die X-Achse angeht, ungebremst abgearbeitet werden.

FIG 3 ist ein Diagramm mit einer interpolierten Bahnkurve im X-Y Ortsraum, der durch die X und Y-Achsen der Werkzeugmaschine oder des Roboters aufgespannt wird. Die Grenzlinie SWE entspricht der durch den Software-Endschalter SWEX vom Benutzer vorgegebenen Endlage der Achsbewegungen in der X-Richtung. Die interpolierte Kreisbahnkurve I1' im X-Y Raum entsteht durch einen Interpolationsverband der X- und Y-Achsen. Der X-Anteil dieses Interpolationsverbands ist in FIG 1 als Interpolationskurve I1 dargestellt und kann, was die X-Achse angeht, ungebremst abgearbeitet werden, obgleich die interpolierte Bahnkurve I1' im X-Y Raum der Grenzlinie SWE des Software-Endschalters sehr nahe kommt.

Bei der bekannten Lösung wird der X-Anteil dieses Interpolationsverbands in FIG 4 als Interpolationskurve I1'' dargestellt. Diese Interpolationskurve I1'' befindet sich aber in dem Bereich zwischen dem Software-Vor-Endschalter SWVE und dem eigentlichen Software-Endschalter SWE und wird deshalb durch die herabgesetzte Maximalgeschwindigkeit Vxbmax unnötigerweise begrenzt. Die Bearbeitungsgeschwindigkeit ist herabgesetzt, obgleich die Interpolationskurve I1' eigentlich immer unterhalb der noch abbremsbaren maximalen Geschwindigkeit Vxmax liegt (vergleiche FIG 4 mit FIG 2). Das erfindungsgemäße Verfahren der FIG 2 ist somit eine eindeutige Verbesserung gegenüber dem bekannten Verfahren der FIG 4.

In FIG 5 stellt die Kurve I2 eine Interpolationskurve in Orts-Geschwindigkeitsraum X-Vx dar. Vom ersten Interpolationspunkt i0 bis zum Interpolationspunkt il liegt die Interpolationskurve I2 vollständig unterhalb der maximalen Geschwindigkeitskurve Vxmax. Das bedeutet, daß bei einer Abbremsung mit der für die X-Achse maximalen zulässigen axialen Bremsbeschleunigung die X-Achse immer vor der vorgegebenen Endlage SWE zum Stillstand kommen würde. Die Interpolationskurve I2 wird aus diesem Grunde vom ersten Interpolationspunkt i0 bis zum Interpolationspunkt il auch ungebremst abgearbeitet. Am Interpolationspunkt il wird vom Interpolator NCI, wie bei jedem anderen Interpolationspunkt auch, der nächste Interpolationspunkt - in diesem Fall der Punkt i2 - ermittelt. Der Software-Endschalter SWEX stellt fest, daß vom Punkt i2 aus eine Abbremsung mit der für die X-Achse maximalen zulässigen axialen Bremsbeschleunigung entlang der strichpunktierten Bremskurve B2 bewirkt, daß die X-Achse am Punkt S2 zum Stillstand käme, also erst hinter der vorgegebenen Endlage SWE. Diese Situation ist auch graphisch daran zu erkennen, daß der Punkt i2 jenseits der Vxmax Kurve liegt. Der Software-Endschalter SWEX verhindert daher, daß der nächste Interpolationspunkt i2 als Sollwert an die X-Achse ausgegeben wird und leitet statt dessen eine vom Punkt il ausgehende sofortige Abbremsung mit der für die X-Achse maximalen zulässigen axialen Bremsbeschleunigung entlang der strichpunktierten Bremskurve B1 ein. Die X-Achse kommt daher schon am Punkt S1 zum Stillstand, d.h. auf oder unmittelbar vor der vorgegebenen Endlage SWE.

FIG 6 ist ein Diagramm mit einer interpolierten Bahnkurve im X-Y Ortsraum, der durch die X und Y-Achsen der Werkzeugmaschine oder des Roboters aufgespannt wird. Die Grenzlinie SWE entspricht der durch den Software-Endschalter SWEX vom Benutzer vorgegebenen Endlage der Achsbewegungen in der X-Richtung. Die interpolierte Kreisbahnkurve I2' im X-Y Raum entsteht durch einen Interpolationsverband der X- und Y-Achsen. Der X-Anteil des Interpolationsverbands ist in FIG 5 als Interpolationskurve I2 dargestellt und kann, was die X-Achse angeht, bis zum Punkt il' ungebremst abgearbeitet werden. Am Punkt il' wird die weitere Interpolation unterbrochen und eine Abbremsung X-Achse mit der für die X-Achse maximalen zulässigen axialen Bremsbeschleunigung eingeleitet und damit aus dem in diesem Beispiel nur zwei Achsen umfassenden Interpolationsverbands gelöst. Die aus dem Interpolationsverband verbleibende Y-Achse wird nur mit der bearbeitungsbahnspezifischen Bremsbeschleunigung abgebremst. In Folge davon, verläßt die Bearbeitungsbahn die vorgesehene Kreisbahn I2' und folgt der strichpunktierten Bremskurve B1' bis zum Stillstand am Punkt S1', der auf oder unmittelbar vor der vorgegebenen Endlage SWE liegt. Die von dem Software-Endschalter vorgegebene Endlage der Achsbewegungen in der X-Richtung wird nicht überfahren.

Bei der bekannten Lösung wird der X-Anteil des Interpolationsverbands in FIG 7 als Interpolationskurve I2'' dargestellt. Diese Interpolationskurve I2'' befindet sich aber in dem Bereich zwischen dem Software-Vor-Endschalter SWVE und dem eigentlichen Software-Endschalter SWE und wird deshalb durch die herabgesetzte Maximalgeschwindigkeit Vxbmax unnötigerweise begrenzt und die Bearbeitungsgeschwindigkeit ist daher herabgesetzt. Zudem wird erst beim Erreichen der von dem Software-Endschalter vorgegebene Endlagenbegrenzung SWE am Punkt il'' dies erkannt und eine Notbremsung mit einer Bremsbeschleunigung, die die maximale zulässige axiale Bremsbeschleunigungen übersteigt, eingeleitet, damit die X-Achse möglichst bald hinter der Endlagenbegrenzung SWE am Punkt Sx zum Stillstand kommt. Bei der bekannten Lösung wird nicht nur mit zu großen axialen Bremsbeschleunigungen abgebremst, sondern die Endlagenbegrenzung SWE kann auch nicht eingehalten werden.

## Patentansprüche

1. Verfahren zum Betrieb einer numerisch gesteuerten mehrachsigen Werkzeugmaschine oder eines Roboters gemäß einem jeweils vorgegebenen Programm (NCP), das nach einer Satzaufbereitung (NCA) in einem Interpolator (NCI) in Interpolationsschritten Sollwerte zur Ansteuerung der Achsen (AX,AY, AZ,AR) in einem Interpolationsverband bestimmt, wobei die Bewegungen mindestens einer der Achsen (AX) durch einen Software-Endschalter (SWEX) auf eine jeweils vorgebbare Endlage (SWE) begrenzbar ist und wobei die Achsen, die noch vor dem jeweiligen Software-Endschalter zum Stillstand gebracht werden können, mit den bestimmten Sollwerten angesteuert werden, **dadurch gekennzeichnet,** daß im Interpolator (NCI) bei jedem Bestimmen des nächsten Interpolationsschritts (i2) für jede Achse (AX) mit Software-Endschalter (SWEX) geprüft wird, ob diese unter Berücksichtigung ihrer beim nächsten Interpolationsschritt (i2) zu erreichenden axialen Geschwindigkeit bei einer Bremsung mit ihrer maximalen axialen Bremsbeschleunigung noch bis zu der durch den jeweiligen Software-Endschalter (SWEX) bestimmten jeweiligen axialen Endlage (SWE) zum Stehen kommen kann und, daß Achsen, für die dies nicht mehr der Fall ist, anstelle des nächsten Interpolationsschritts (i2) mit ihrer jeweiligen maximalen axialen Bremsbeschleunigung abgebremst werden.

2. Verfahren nach Anspruch 1, **dadurch gekennzeichnet,** daß dann, wenn eine Achse (AX) zur Endlagenbegrenzung (SWE) mit ihren jeweiligen maximalen axialen Bremsbeschleunigungen abgebremst wird, diese Achse (AX) aus dem Interpolationsverband gelöst wird und die verbleibenden Achsen (AY) mit der bearbeitungsbahnspezifischen Bremsbeschleunigung abgebremst werden.

## Claims

1. Method for operating a numerically controlled multi-axle machine tool or a robot according to a respectively specified program (NCP) which, after a record preparation (NCA), in an interpolator (NCI) in interpolation steps determines desired values for controlling the axles (AX, AY, AZ, AR) in an interpolation group, wherein the movements of at least one of the axles (AX) can be limited by a software limit switch (SWEX) to a respectively specifiable final position (SWE), and wherein the axles which can still be stopped before the respective software limit switch are controlled by the determined desired values, characterized in that, in the interpolator (NCI), with each determining of the next interpolation step (i2), for each axle (AX) with software limit switch (SWEX) it is examined whether, with consideration of its axial speed which is to be achieved at the next interpolation step (i2), this axle, with a braking with its maximum axial braking acceleration, can come to a stop as far as the respective axial final position (SWE) determined by the respective software limit switch (SWEX), and in that axles for which this is no longer the case are braked with their respective maximum axial braking acceleration instead of the next interpolation step (i2).

2. Method according to claim 1, characterized in that when an axle (AX) is braked for final position limiting (SWE) with its respective maximum axial braking accelerations, this axle (AX) is released from the interpolation group and the remaining axles (AY) are braked with the braking acceleration which is specific to the machining path.

## Revendications

1. Procédé pour faire fonctionner une machine outil à commande numérique à plusieurs axes ou un robot suivant un programme (NCP) prescrit, qui, après une préparation (NCA) de séquences, détermine dans un interpolateur (NCI), dans des étapes d'interpolation, des valeurs de consigne pour commander les axes (AX, AY, AZ, AR) en une combinaison d'interpolation, les mouvements d'au moins l'un (AX) des axes pouvant, par un interrupteur (SWEX) de fin de course à logiciel, être limité à une position (SWE) d'extrémité prescrite, et les axes qui peuvent encore être mis à l'arrêt par l'interrupteur de fin de course à logiciel associé étant commandés par les valeurs de consigne déterminées, caractérisé en ce que l'on contrôle dans l'interpolateur (NCI), à chaque détermination de l'étape (i2) d'interpolation suivante pour chaque axe (AX), par l'interrupteur (SWEX) fin de course à logiciel, si cet axe, en tenant compte de sa vitesse axiale à atteindre à la prochaine étape (i2) d'interpolation, peut, en cas de freinage à son accélération de freinage axial maximum, encore s'arrêter jusqu'à la position (SWE) d'extrémité axiale associée déterminée par l'interrupteur (SWEX) de fin de course à logiciel associé et en ce que des axes pour lesquels cela n'est plus le cas sont, au lieu de l'étape (i2) d'interpolation suivante, freinés à leur accélération de freinage axial maximum associée.

2. Procédé selon la revendication 1, caractérisé en ce que, si un axe (AX) est, pour la délimitation (SWE) de la position d'extrémité, freiné à ses accélérations de freinage axial maximum associées, cet axe (AX) est détaché de l'association d'interpolation et les axes (AY) restant sont freinés à l'accélération de freinage spécifique à la voie d'usinage.
